# EUROPÄISCHE PATENTSCHRIFT

(11) **EP 2 052 602 B1**
(45) Veröffentlichungstag und Bekanntmachung des Hinweises auf die Patenterteilung: **22.12.2010**
(21) Anmeldenummer: 07019274.5
(22) Anmeldetag: 01.10.2007
(51) Int. Cl.: A01M 17/00

(54) **Verfahren zum Bekämpfen von Schädlingen**
Method for pest control
Procédé destiné à combattre des parasites

(43) Veröffentlichungstag der Anmeldung: 29.04.2009
(73) Patentinhaber: Binker Materialschutz GmbH, 91207 Lauf (DE)
(72) Erfinder: Binker, Gerhard, Dr., 90607 Rückersdorf (DE); Binker, Joachim, 90518 Altdorf (DE)
(74) Vertreter: Naefe, Jan Robert

(56) Entgegenhaltungen:
- EP-A- 0 963 694
- DE-A1- 19 621 516
- DE-A1- 19 706 842
- DE-A1- 19 709 914
- DE-A1- 19 813 894
- US-A1- 2005 220 662

## Beschreibung

Die Erfindung betrifft ein Verfahren zum Bekämpfen von Schädlingen. Insbesondere betrifft die Erfindung ein Verfahren zum Bekämpfen von Schädlingen in Gebäuden, wie beispielsweise Mühlen, Lagergebäuden etc.

Aus der DE 197 46 026 C2 ist ein Verfahren bekannt, welches der Entwesung von Gebäuden und Gebäudeteilen dient. Insbesondere betrifft die DE 197 46 026 C2 die Bekämpfung von Schädlingen in Räumen, in denen Lebensmittel verarbeitet oder gelagert werden. Hierzu soll mindestens eine Heizeinrichtung verwendet werden, die eine Gebläseeinrichtung zum Erzeugen heißer Luftströme umfasst. Hiermit sollen Innenräume des Gebäudes, einschließlich dort aufgestellter Anlagenteile, auf eine Schädlinge abtötende Temperatur erwärmt und bei dieser Temperatur gehalten werden. Hierzu sollen zwei Luftströme auf mindestens zwei Eingangsbereiche von Kanälen oder Kanalsystemen, welche durch Einbauten im Gebäude gebildet sind, im Innenraum des zu entwesenden Gebäudes derart gerichtet werden, dass innerhalb der Kanäle oder der Kanalsysteme ein Überdruck zur Erwärmung schlecht zugänglicher Stellen erzeugt wird. Dieser Überdruck soll nacheinander in verschiedenen Kanälen und Kanalsystemen zu deren Erwärmung erzeugt und nach einem Aufheizen der Gebäudeinnenraum durch im Wesentlichen ungerichtete Luftströme bei einer vorbestimmten Temperatur zum Abtöten der Schädlinge gehalten werden. Die Oberfläche der Heizregister soll hierbei 190° bis 250°C nicht überschreiten, so dass im Gebäude eine Temperatur von 50° bis 60°C, vorzugsweise 55°C, erreicht werden.

Aus der DE 198 25 880 C1 ist ein Verfahren zur thermischen Schädlingsbekämpfung bekannt, bei dem ein brennstoffbetriebenes Heizgerät mit separater Rauchgasführung zum Aufheizen eines Behandlungsraumes verwendet wird. Zusätzlich können Begasungsmittel der Behandlungsraumluft zugesetzt werden, wobei jedoch die Brennkammer des Heizgerätes von der Wärmetauscherkammer gasdicht abgetrennt ist. Bei einem reinen Aufheizen werden mit diesem Verfahren 50° bis 65°C im Behandlungsraum angestrebt, beim Zusatz von Begasungsmitteln sollen 22° bis 40°C im Behandlungsraum angestrebt werden. Bei diesem Verfahren wird zumindest mit einer Leitung die heiße Luft mit einem außerhalb des Gebäudes angeordneten Heizgerät in das Gebäude eingebracht und aus dem Gebäude wieder abgesaugt.

Aus der DE 199 50 634 C1 ist eine thermisch unterstützte Begasung bekannt, bei der ein brennstoffbetriebenes Heizgerät mit separater Rauchgasführung zum Aufheizen verwendet wird, wobei zwischen Behandlungsraum und Heizgerät ein Wärmetauscher eingebaut ist, der eine Zersetzung des eingesetzten Begasungsmittels verhindern soll. Auch bei diesem Verfahren werden das Heizgerät und der entsprechende Wärmetauscher außerhalb eines zu begasenden Gebäudes angeordnet und entsprechend erhitzte Raumluft in das Gebäude eingeführt. Zudem kann ein entsprechendes Begasungsmittel eingeführt werden.

Die vorgenannten Verfahren werden vielfach eingesetzt. Gleichwohl kann mit diesen Verfahren eine Neubesiedlung durch Schädlinge immer wieder auch nach relativ kurzer Zeit beobachtet werden.

Aufgabe der Erfindung ist es, ein Verfahren zur Schädlingsbekämpfung zu schaffen, bei dem die Schädlinge sicherer bekämpft werden und eine schnelle Neubesiedlung verhindert wird.

Die Aufgabe wird mit einem Verfahren mit den Merkmalen des Anspruchs 1 gelöst.

Vorteilhafte Weiterbildungen sind in den Unteransprüchen gekennzeichnet.

Erfindungsgemäß wurde herausgefunden, dass bei wärmekombinierten Begasungen gemäß der Patentschrift DE 199 50 634 und der DE 198 25 880 und vor allem bei reinen Wärmebehandlungen gemäß Patentschrift DE 197 46 026 die angewendete Wärme zu einem Austreibeeffekt der schädlichen Insekten aus den Behandlungsräumen in kältere Zonen (meist Fassadenbereiche) führt, wo die Insekten überleben und nach der Behandlung relativ schnell in die Gebäude bzw. Behandlungsräume zurückkehren und neue Populationen aufbauen. Erfindungsgemäß konnte festgestellt werden, dass der Austreibeeffekt durch die Anwendung zu hoher Verfahrenstemperaturen stattfindet, bei denen für Schädlinge noch weit vor ihrer Abtötung ungünstige Lebensbedingungen geschaffen werden. Diesen ungünstigen Lebensbedingungen weichen die Schädlinge aus, bevor sie abgetötet werden können, indem sie in Bereiche mit besseren Lebensbedingungen abwandern.

Insbesondere beim Einleiten von Wärme an einem zentralen Punkt, wie dies in den genannten Druckschriften ausgeführt ist, kommt es zu lokalen Überhitzungen, die Schädlinge vertreiben, bevor sie durch Wärme alleine oder in Kombination mit Begasungsmitteln absterben. Auch können Materialschäden an Beton, Maschineninterieur auftreten. Insbesondere bei dem Verfahren gemäß der Patentschrift DE 197 46 026 führt aber grade eine höhere Temperatur vermeintlich dazu, dass die Schädlinge schneller absterben oder bei den anderen Verfahren dazu, dass weniger Begasungsmittel benötigt wird.

Beim Stand der Technik ist zudem nachteilig, dass durch zusätzliches Warmlufteinleiten und eine damit verbundene Druckerhöhung eine relativ aufwändige Kreislaufführung im Stand der Technik nötig ist.

Erfindungsgemäß werden diese vom Erfinder erkannten Nachteile dadurch überwunden, dass die Raum- bzw. Materialtemperaturen nur zwischen 30° und 35°C gewählt werden und die Wärmeeinleitung an mehreren Punkten im Gebäude durchgeführt wird, wobei die Wärmeeinleitung mit Wärmetauschern durchgeführt wird, die über heiße Flüssigkeiten in flexiblen Schlauchleitungen gespeist werden. Zusätzlich wird Begasungsmittel eingeleitet.

Eine geeignete Vorrichtung zum Aufwärmen der Räume ist beispielsweise aus der US 2006/0042583 A1 bekannt und wird von der Firma Dryair INC. hergestellt.

Bei der Erfindung ist von Vorteil, dass die Gebäude durch Konvektion an im Gebäude oder in einem Raum aufgestellten Wärmetauschern schonend auf eine für die Insekten an sich angenehme Temperatur aufgewärmt werden, so dass die Insekten das Gebäude gerade nicht verlassen. Diese Temperatur alleine würde die Schädlinge nicht abtöten, vielmehr schafft sie so gute Bedingungen, dass die Populationen verbleiben und sich sogar vermehren. Deshalb wird bei dem erfindungsgemäßen Verfahren zwingend ein Begasungsmittel eingesetzt, welches im Verfahren besonders gut wirkt, da die Respirationsrate der Insektenstadien inklusive deren Eier bei den für sie idealen Bedingungen relativ hoch ist. Ein weiterer Vorteil ist es, dass Schädlinge, die sich gegebenenfalls in kälteren Gebäudeteilen aufhalten, dem verbesserten Klima zustreben, so dass auch eine verbesserte Bekämpfung möglich ist.

Die Erfindung wird anhand eines Beispiels näher erläutert.

Eine von Reismehlkäfern befallene Kunstmühle soll von den Schädlingen befreit werden. Zur vollständigen Abtötung dieser Population werden alle Öffnungen der Mühle, wie Fenster, Türen, Luftauslässe, Ventilöffnungen, Kamine, Rohrleitungen etc. abgedichtet. Die Mühle wird dann temperiert auf Temperaturen, bei denen sich die Insekten noch sehr wohl fühlen und nicht aus dem Behandlungsraum getrieben werden, bevorzugt 30° bis 35°C. Das Temperieren erfolgt mit bevorzugt Heizöl beheizten Brennern, die über einen Wärmetauscher ein flüssiges Medium, z. B. Glykol-Wassermischung, erwärmen, welches dann mittels Umwälzpumpen und relativ dünnen, leicht zu handhabenden Schläuchen zu weiteren Wärmetauschern (Flüssigkeit-Luft-Wärmetauschern) transportiert wird. Die transportierte Wärme wird an die Raumluft des Behandlungsraumes abgegeben, die dann Wände, Decken, Maschinen etc. im Behandlungsraum erwärmt.

Durch die moderate Erwärmung wird die Respirationsrate der Insekten erhöht. Gleichzeitig mit der Erwärmung oder nach Abschluss der Erwärmung wird in das Gebäude ein Begasungsmittel eingeleitet. Als Begasungsmittel wird beispielsweise Sulfuryldifluorid eingeleitet. Es kann beobachtet werden, dass durch die moderate Erwärmung und die erhöhte Respirationsrate die Insekten das Begasungsmittel schnell aufnehmen und schnell absterben. Die Schlauchleitungen können gasdicht in das Gebäude geführt werden, so dass kein Begasungsmittel verloren geht.

Im Gegensatz zum Stand der Technik müssen keine dicken Wärme-/Luftschläuche in das zu behandelnde Gebäude verlegt werden.

Durch die Flüssigkeits-/Schlauchleitungen geht wenig Wärme verloren. Hierdurch ist das Verfahren weniger kostenintensiv.

Von Vorteil ist, dass die Flüssigkeits-/Schlauchleitungen an mehreren Stellen in das Gebäude verlegt werden können, so dass an verschiedenen Stellen Luft-Wärmetauscher im Behandlungsraum angeordnet werden können. Hierdurch ergibt sich von vornherein eine gute Wärmeverteilung, so dass lokale Überhitzungen, die Materialen im Gebäude schädigen können, vermieden werden.

Da kein zusätzlicher warmer Luftstrom eingeleitet wird, bzw. dieser nicht im Kreislauf geführt wird, kann die Abdichtung gegen Gasverlust auch nicht beschädigt werden.

## Patentansprüche

1. Verfahren zum Bekämpfen von Schädlingen in Gebäuden, insbesondere Gebäuden oder Räumen, in denen Pflanzenerzeugnisse, Vorräte und/oder Lebensmittel gelagert oder verarbeitet werden, wobei die Raumtemperatur und/oder Materialtemperatur der zu entwesenden Gebäude oder Räume auf eine Temperatur eingestellt wird, die einem für die Lebensverhältnisse optimalen Temperaturbereich der abzutötenden Schädlinge entspricht, wobei die Temperaturerhöhung durch Wärmeeinleitung in das Gebäude an mehreren Punkten durchgeführt wird und die Wärmeeinleitung mit Wärmetauschern durchgeführt wird, die in dem Gebäude angeordnet sind und über heiße Flüssigkeiten in flexiblen Schlauchleitungen gespeist werden, wobei zusätzlich vor oder während oder nach dem Erreichen der vorbestimmten Temperatur und/oder vor oder nach einer gewissen Haltezeit der optimalen Temperatur ein die Schädlinge abtötendes Begasungsmittel eingebracht wird.

2. Verfahren nach Anspruch 1, **dadurch gekennzeichnet, dass** das Begasungsmittel Sulfuryldifluorid ist.

3. Verfahren nach einem der vorhergehenden Ansprüche, **dadurch gekennzeichnet, dass** alle Öffnungen des Gebäudes wie Fenster, Türen, Luftauslässe, Ventilöffnungen, Kamine, Rohrleitungen und dergleichen abgedichtet werden und das Gebäude vorher oder gleichzeitig oder anschließend auf die Temperaturen temperiert wird, bei denen sich die Schädlinge wohl fühlen, um ein Austreiben der Schädlinge aus dem Behandlungsraum zu verhindern.

4. Verfahren nach einem der vorhergehenden Ansprüche, **dadurch gekennzeichnet, dass** das Temperieren mit beheizten Brennern erfolgt, die außerhalb des Gebäudes oder Raumes angeordnet sind und über einen Wärmetauscher ein flüssiges Medium erwärmen, welches dann mittels Umwälzpumpen und Schläuchen zu in dem Gebäude angeordneten Wärmetauschern transportiert wird.

## Claims

1. Method for pest control in buildings, in particular buildings or spaces in which plant products, supplies and/or foodstuffs are stored or processed, wherein the room temperature and/or material temperature of the buildings or spaces to be disinfested is set to a temperature corresponding to a temperature range optimal for the living conditions of the pests to be killed, wherein the temperature increase is carried out by means of heat introduction into the building at several points and the heat introduction is carried out by means of heat exchangers that are arranged in the building and supplied via hot liquids in flexible tubing, wherein, additionally, before or during or after a predetermined temperature is reached and/or before or after a certain holding time of the optimum temperature, a fumigant killing the pests is introduced.

2. Method according to claim 1, **characterised in that** the fumigant is sulfuryl fluoride.

3. Method according to any one of the preceding claims, **characterised in that** all openings of the building, such as windows, doors, air outlets, valve openings, chimneys, pipelines and the like are sealed and the building, beforehand or at the same time or subsequently, is brought to the temperature at which the pests are comfortable in order to prevent the pests from being driven out of the treated space.

4. Method according to any one of the preceding claims, **characterised in that** bringing to temperature is done by means of heated burners which are arranged outside of the building or space and which, by means of a heat exchanger, heat a liquid medium which is then transported by means of circulation pumps and tubes to heat exchangers arranged within the building.

## Revendications

1. Procédé pour la lutte contre les parasites dans des bâtiments, en particulier des bâtiments ou des locaux dans lesquels sont stockés ou traités des produits végétaux, des réserves et/ou des produits alimentaires, dans lequel on règle la température ambiante et/ou la température matérielle des bâtiments ou des locaux à déparasiter à une température qui correspond à la plage de température optimale pour les conditions vitales des parasites à tuer, l'augmentation de température étant effectuée par apport de chaleur en plusieurs points dans le bâtiment et l'apport de chaleur est effectué au moyen d'échangeurs de chaleurs qui sont agencés dans le bâtiment et sont alimentés avec des liquides chauds dans des conduites tubulaires flexibles, dans lequel on introduit un produit gazeux létal pour les parasites avant, pendant ou après avoir atteint la température prédéterminée et/ou avant ou après un certain temps de maintien de la température optimale.

2. Procédé selon la revendication 1, **caractérisé en ce que** le produit gazeux est du difluorure de sulfuryle.

3. Procédé selon l'une des revendications précédentes, **caractérisé en ce que** toutes les ouvertures du bâtiment, comme fenêtres, portes, évacuations d'air, ouvertures de vannes, cheminées, conduites tubulaires, et similaires sont étanchées et le bâtiment est tempéré, auparavant ou simultanément ou ensuite, aux températures auquel les parasites se sentent bien, afin d'empêcher une fuite des parasites hors du local de traitement.

4. Procédé selon l'une des revendications précédentes, **caractérisé en ce que** la mise à température a lieu avec des brûleurs chauffés qui sont agencés à l'extérieur du bâtiment ou du local et qui réchauffent un milieu liquide au moyen d'un échangeur de chaleur, ce milieu liquide étant alors transporté vers les échangeurs de chaleur agencés dans le bâtiment, au moyen de pompes de recirculation et de tuyaux.
